# EUROPEAN PATENT SPECIFICATION

(11) **EP 1 575 371 B1**
(45) Date of publication and mention of the grant of the patent: **21.03.2007**
(21) Application number: 02781677.6
(22) Date of filing: 18.12.2002
(51) Int. Cl.: A23F 3/14

(54) **A PROCESS FOR PREVENTING DEVELOPMENT OF FLAVOUR TAINT IN CTC TEAS USING ANTIOXIDANTS**
EIN VERFAHREN ZUR VERHINDERUNG DER ENTWICKLUNG VON FEHLAROMA IN CTC TEES MITTELS ANTIOXIDANTIEN
PROCESSUS DE PREVENTION DU DEVELOPPEMENT D'UNE SAVEUR PASSEE DANS DES THES ISSUS DU PROCESSUS CTC AU MOYEN D'ANITOXYDANTS

(43) Date of publication of application: 21.09.2005
(73) Proprietor: COUNCIL OF SCIENTIFIC AND INDUSTRIAL RESEARCH, New Delhi 110 001 (IN)
(72) Inventor: SREEKANTAYYA, Nagalakshmi, 570 013 Mysore, Karnataka (IN); LINGAMALLU, Jagan Mohan, RAO, 570 013 Mysore, Karnataka (IN); NANJUNDASWAMY, Chandrasekhar, 570 013 Mysore, Karnataka (IN); N, Muraleedharan, 570 013 Mysore, Karnataka (IN)
(74) Representative: Bloch, Gérard
(86) International application number: PCT/IB2002/005462
(87) International publication number: WO 2004/054378

(56) References cited:
- WO-A-97/18720
- US-A1- 2001 033 880
- US-B1- 6 348 224
- DATABASE WPI Section Ch, Week 199124 Derwent Publications Ltd., London, GB; Class D13, AN 1991-171747 XP002251682 & CN 1 045 686 A (ZHEJIANG AGRIC UNIV), 3 October 1990 (1990-10-03)
- PATENT ABSTRACTS OF JAPAN vol. 1995, no. 06, 31 July 1995 (1995-07-31) & JP 07 067530 A (NIKKEN FOOD KK), 14 March 1995 (1995-03-14)

## Description

### Technical Field

The present invention related to a process for preventing development of pacha taint in CTC (Crush Tear Curl) teas using antioxidants

### Background Art

Tea is the most popular beverage and one of the earliest known beverages in the world. Tea refers to the plant Camellia sinenesis; the dried, processed leaf manufactured from it, extracts derived from the leaf, and beverages prepared from the leaf or extracts of this species. The development of the most characteristic attributes of the tea, i.e. the flavour and colour of the beverage is dependent on the manipulation of tealeaves to induce certain biochemical changes (Scott, 1964, Biotechnology, 5; 577). The starting material for manufacturing tea consists of tender young shoots, usually two or three leaves and the bud of the tea plant. The chemical composition of these shoots and the reactions that occur during the process determine the nature of the finished product.

During the processing and then storing, certain off flavours along with desired flavours develop in the tea. 'Green note' is one such flavour. This off flavour which is developed in storage after three to four weeks from manufacture is also called 'grassy', 'fishy' or 'painty' flavour and commonly known as 'pacha taint' (Ganeshan and Ramaswamy, 1996, February, The Planters chronicle, p 91). A grassy, fishy or painty smell is called "pacha taint"

This type of off-flavour was reported in the Wynaad and Nilgiri-Wynaad regions during certain periods of the year in CTC teas after 3-6 weeks of storage. When the teas were fresh, professional tasters report these as normal. Pacha taint has become a serious concern for the planters and traders of tea in the Wynaad and Nilgiri-Wynaad areas. The price of the pacha-tainted tea is low, when compared to normal tea. Due to this problem, the planters are not getting suitable price for their product. Hence, it was thought that the prevention of development of pacha taint is the urgent need.

This taint or off-flavour is increasingly becoming a menace in tea industry. This taint occurs mainly during the storage after the manufacturing is accomplished. The chemical constituents mainly responsible for the formation of this odour/taint are C₆ aldehydes and C₆ alcohols. These compounds are formed when the lipid degradation followed by fatty acid oxidation takes place. The lipids not degraded during the manufacturing process degrade during storage and the off flavour is produced.

Several other factors enhance the development of grassy aroma in tea, such as low temperature of firing, increased plucking intervals, type and period of withering, rolling, fermentation etc. Various environmental conditions also have a role to develop this taint.

Antioxidants play a crucial role in preventing or delaying autoxidation and have attracted a lot of attention as food additives. The deterioration of food with time results from its biological nature largely and is inevitable. During the production, processing, distribution and storage prior to actual consumption, food undergoes various modes of deterioration that involve biological changes by microbes as well as chemical changes. The latter is ascribed to enzymatic and non-enzymatic oxidation of lipids and phenolic substance, which cause undesirable changes in flavour, appearance, physical character, nutritional value and toxicity. Deoxygenation, airtight packing, and other techniques have solved some of these problems to a certain extent, but the role of antioxidants as either food constitutents or as additives cannot be overlooked. Both synthetic and natural antioxidants are widely used in many food products.

Database WP/Section Ch, Week 199124 Derwent Publications Ltd, London, GB, Class D13, AN1991-171747 XP002251682 & CN 1045686 A disclose the addition of a food acid antioxidant during primary tea processing before drying in order to improve tea quality.

US 2001/0033880 discloses the addition of ascorbic acid to CTC cuts prior to, during or after fermentation. Other substances can be used (dehydroascorbic acid, 1-sorbanic acid, 5-phenyl-3,4-diketo-γ-butyrolactone) in order to render black tea leaves infusible or extractable in cold and hot water. The prevention of off-flavours is not disclosed.

Literature survey revealed that there is no report on the prevention of the development of this off-flavour. BHA (Butylated hydroxy anisole) is one of the known synthetic antioxidant allowed as food additive in food processing at ppm levels.

### Objects of the invention

The main object of the present invention is to provide a process for preventing development of pacha taint in CTC teas using antioxidants.

Another object of the present invention is to keep CTC teas devoid of pacha-taint during storage.

### Summary of the Invention

Accordingly, the present invention provides a process for the prevention of development of pacha taint in CTC teas using antioxidants which comprises, diluting the antioxidant emulsion; spraying the emulsion homogeneously on the fermented tea material; drying, grading, packing and storing the packed material.

### Detailed Description of the Invention

In accordance to the objectives of the present invention, the process provides a CTC tea which is devoid of pacha taint, said process comprising the steps of:
(i) diluting emulsion of an antioxidant in a suitable medium,
(ii) spraying the emulsion homogeneously on the fermented tea material in the black tea manufacturing process,
(iii) drying the above material and packing suitably, and
(iv) storing of the packed material.

In an embodiment of the invention provides a process, wherein the medium used for diluting the antioxidant is as aqueous medium.

Another embodiment, the ratio of emulsion of antioxidant and diluting medium is in 1: 200 to 500.

Still another embodiment, the antioxidant used in step (i) is a synthetic antioxidant and /or related antioxidants.

Still another embodiment, the antioxidant used is butylated hydroxy anisole (BHA).

Yet another embodiment, the amount of antioxidant used is in the range of 0.001 to 0.05% weight percent

Yet another embodiment, the sprayer used in step (ii) may be able to spray one litre of solution in 5 - 8 minutes.

Yet another embodiment, the dryer used in step (iii) is VFB type dryer.

Yet another embodiment, the drying is carried out at a temperature range of 110 to 140°C.

Yet another embodiment, grading of the dried material is as per the size of the particles.

One more embodiment, the dried material is packed using suitable packing material selected from polythene bags, polythene lined gunny bags and LDPE bags.

Another embodiment, the packed material is stored under ambient conditions.

In yet another embodiment, a professional taster may do the sensory evaluation of the packed material, and it is evaluated for a period of 6-8 weeks at two weeks intervals.

A process for the prevention of development of pacha taint in CTC teas using antioxidants carried out according to the flow diagram scheme-1.

Sensory evaluation: Appearance of the product is observed. 8 g of SFD is brewed in 142 ml of boiling water for 5min. The colour, aroma and taste of the brew are scored on a ten-point scale. The colour, aroma and flavour of the infusion are also scored on a ten-point scale. Taster's remarks are presented.

### The advantages of the process are:

This is the first report of a process for the prevention of development of pacha taint in CTC teas using antioxidants.

The antioxidant used is a PFA (Prevention of Food Adulteration Act) allowed compound.

The novelty of the process is the use of antioxidant for preventing development of pacha taint in CTC teas.
The following examples are given by the way of illustration only and should not be construed to limit the scope of the present invention.

### Example-1

Tealeaf (1500g) withered for 18 h. Leaves were subjected to distortion using rotarvane and CTC machine. Twisted leaf is mixed with RC and subjected to fermentation at 27°C for 50-60 min. The antioxidant (30-50 mg) emulsion is diluted and sprayed on to the fermented leaf manually. Fermented leaves are subjected to drying in a Fluidized bed dryer until the moisture is reduced to 3%. Manufactured black tea is subjected to sieving manually to separate different grades. Super fine dust (SFD) is packed separately and kept for storage. It is subjected to sensory evaluation at two weeks. The scores are presented in the following tables.

### Example-2

Tea leaves (500 Kg) withered for 14 -20h. Leaves were subjected to distortion using one rotarvane and four CTC machines in series RC is mixed with leaf during distortion. Distorted leafy material is subjected to Drum fermentation at 27°C for 50-60 min in drums under special conditions. The antioxidant (10-15 g) emulsion (40 ml) is diluted to 10 L with water and sprayed on to the fermented leaf using power sprayer. Fermented leafy material is subjected to drying in a Fluidized bed dryer until the moisture is reduced to 3%. Manufactured black tea is subjected to mechanical sieving to separate different grades. Super fine dust is packed separately and kept for storage. It is subjected to sensory evaluation at two weeks interval for three months. The scores are presented in the following tables.

### CHEMICAL PARAMETERS OF SFD (SUPER FINE DUST) SAMPLES FROM NILGIRI-WYNAD REGION FACTORY TRIALS

| Samples | Lipid (%) (Initial) | Leaf aldehyde (µg%) (Initial) | Lipid (%) (After 4 weeks) | Leaf Aldehyde (µg %) (After 4 weeks) | Taster's Score Initial | Taster's Score After 4 Weeks |
|---|---|---|---|---|---|---|
| T1-(BHA) | 7.00 | 1478 | 6.01 | 1454 | 8 | 7 |
| T2 - | 7.43 | 2070 | 6.48 | 1778 | 8 | 5 |
| Control | 7.43 | 2070 | 6.93 | 1886 | 8 | 5 |
| T8-Control | 6.98 | 1456 | 6.04 | 1358 | 7 | 7 |
| T9-(BHA) | | | | | | |

After 4 weeks the taster's score remained unaltered, indicating the samples remained good.

## Claims

1. A process for the prevention of development of pacha taint in CTC teas, said process comprising the steps of:
(i). diluting emulsion of an antioxidant in a suitable medium,
(ii). spraying the emulsion homogeneously on the fermented tea material in the black tea manufacturing process,
(iii). drying the above material and packing suitably, and
(iv). storing of the packed material.

2. The process as claimed in claim 1, wherein the suitable medium used for diluting the antioxidant is as aqueous medium.

3. The process as claimed in claim 1, wherein the ratio of emulsion of antioxidant and diluting medium is in 1: 200 to 500.

4. The process as claimed in claim 1 wherein, the antioxidant used in step (i) is a synthetic antioxidant and /or related antioxidants.

5. The process as claimed in claim 1, wherein the antioxidant used is butylated hydroxy anisole (BHA).

6. The process as claimed in claim 1, wherein the amount of antioxidant used is in the range of 0.001 to 0.05% weight percent

7. The process as claimed in claim 1, wherein the sprayer used in step (ii) may be able to spray one litre of solution in 5 - 8 minutes.

8. The process as claimed in claim 1, wherein the drier used in step (iii) is selected from fluidised bed type drier, VFB drier and any suitable drier.

9. The process as claimed in claim 1, wherein the drying is carried out at a temperature range of 110 to 140°C.

10. The process as claimed in claim 1, wherein in step (iii), grading of the dried material is as per the size of the particles.

11. The process as claimed in claim 1, wherein the dried material is packed using suitable packing material selected from polythene bags, polythene lined gunny bags and LDPE bags.

12. The process as claimed in claim 1, wherein the packed material is stored under ambient conditions.

13. The process as claimed in claim 1, wherein the CTC tea obtained is devoid of pacha-taint when stored up to 10 weeks.

14. The process as claimed in claim 1, further comprising a sensory evaluation step (v) of the material which may be done by a professional taster / laboratory panel of tasters.

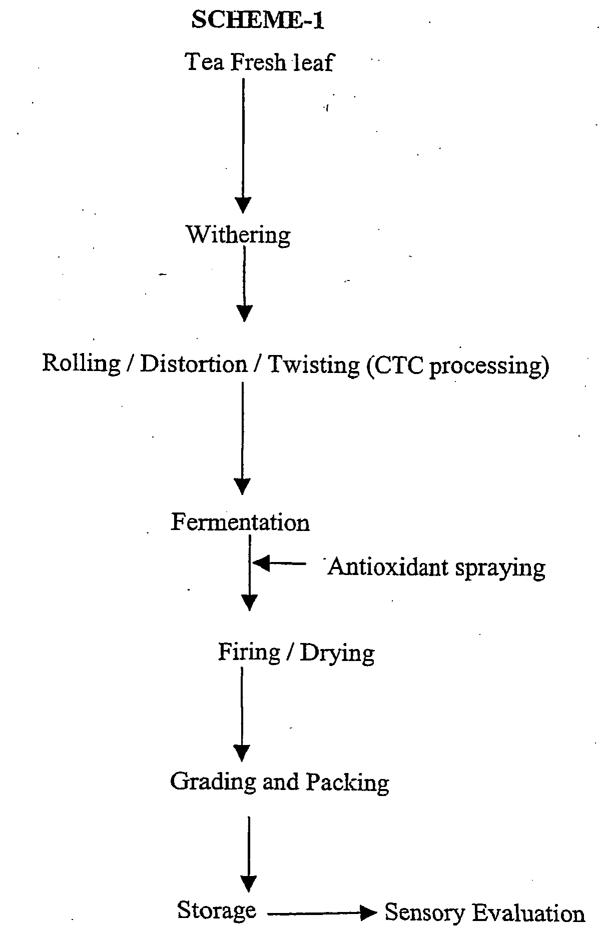

## Patentansprüche

1. Ein Verfahren zur Vorbeugung einer Entwicklung eines Pacha-Beigeschmacks bei CTC-Tees, wobei das Verfahren die Schritte aufweist:
(i) Verdünnen einer Emulsion eines Antioxidationsmittels in einem geeigneten Medium,
(ii) homogenes Sprühen der Emulsion auf das fermentierte Teematerial bei dem Herstellungsverfahren für schwarzen Tee,
(iii) Trocknen des oben genannten Materials und geeignetes Abpacken, und
(iv) Lagern des abgepackten Materials.

2. Das Verfahren nach Anspruch 1, wobei das zum Verdünnen des Antioxidationsmittels verwendete Medium ein wäßriges Medium ist.

3. Das Verfahren nach Anspruch 1, wobei das Verhältnis von Emulsion des Antioxidationsmittels und verdünntem Medium 1:200 bis 500 ist.

4. Das Verfahren nach Anspruch 1, wobei das bei Schritt (i) verwendete Antioxidationsmittel ein synthetisches Antioxidationsmittel und/oder verwandte Antioxidationsmittel sind.

5. Das Verfahren nach Anspruch 1, wobei das verwendete Antioxidationsmittel ein butyliertes Hydroxyanisol (BHA) ist.

6. Das Verfahren nach Anspruch 1, wobei die verwendete Antioxidationsmittelmenge in dem Bereich von 0,001 bis 0,05 Gew-% liegt.

7. Das Verfahren nach Anspruch 1, wobei die bei Schritt (ii) verwendete Sprüheinrichtung in der Lage sein kann, einen Liter der Lösung in fünf bis acht Minuten zu versprühen.

8. Das Verfahren nach Anspruch 1, wobei der in Schritt (iii) verwendete Trockner ausgewählt wird aus einem Wirbelschichttrockner, einem VFB-Trockner und einem beliebigen geeigneten Trockner.

9. Das Verfahren nach Anspruch 1, wobei das Trocknen bei einem Temperaturbereich von 110 bis 140°C durchgeführt wird.

10. Das Verfahren nach Anspruch 1, wobei bei Schritt (iii) ein Trennen des getrockneten Materials anhand der Größe der Partikel vorgenommen wird.

11. Das Verfahren nach Anspruch 1, wobei das getrocknete Material unter Verwendung eines geeigneten Verpackungsmaterials, ausgewählt aus Polyethylensäcken, mit Polyethylen ausgefütterten Sackleinensäcken und LDPE-Säcken, verpackt wird.

12. Das Verfahren nach Anspruch 1, wobei das verpackte Material bei Umgebungsbedingungen gelagert wird.

13. Das Verfahren nach Anspruch 1, wobei der erhaltene CTC-Tee frei von einem Pacha-Beigeschmack ist, wenn er bis zu zehn Wochen gelagert wird.

14. Das Verfahren nach Anspruch 1, das weiterhin einen sensoriell Materialbewertungschritt (v) von einem Berufprüfer/einem Laborjury von Berufprüfer aufweist.

## Revendications

1. Procédé de prévention du développement d'une saveur passée dans des thés CTC, ledit procédé comprenant les étapes suivantes:
(i) dilution d'une émulsion d'un antioxydant dans un milieu approprié;
(ii) pulvérisation homogène de l'émulsion sur le matériau de thé fermenté dans le procédé de préparation de thé noir ;
(iii) séchage dudit matériau et conditionnement approprié ; et
(iv) stockage du matériau conditionné.

2. Procédé selon la revendication 1, dans lequel le milieu approprié utilisé pour la dilution de l'antioxydant est un milieu aqueux.

3. Procédé selon la revendication 1, dans lequel la proportion d'émulsion d'antioxydant dans le milieu diluant est comprise entre 1:200 et 1:500.

4. Procédé selon la revendication 1, dans lequel l'antioxydant utilisé à l'étape (i) est un antioxydant synthétique et/ou un antioxydant équivalent.

5. Procédé selon la revendication 1, dans lequel l'antioxydant utilisé est un hydroxyanisole butylé (BHA).

6. Procédé selon la revendication 1, dans lequel la quantité d'antioxydant utilisée est comprise environ entre 0.001 à 0.05% en poids.

7. Procédé selon la revendication 1, dans lequel le pulvérisateur, utilisé à l'étape (ii), peut être capable de pulvériser un litre de solution en cinq à huit minutes.

8. Procédé selon la revendication 1, dans lequel le séchoir utilisé à l'étape (iii) est choisi dans le groupe comprenant un séchoir à lit fluidisé, un séchoir à lit fluidisé vibrant (VFB) et tout autre séchoir approprié.

9. Procédé selon la revendication 1, dans lequel le séchage est réalisé à une température comprise entre 110°C et 140°C.

10. Procédé selon la revendication 1, dans lequel à l'étape (iii), le classement du matériau séché est réalisé en fonction de la taille des particules.

11. Procédé selon la revendication 1, dans lequel le matériau séché est conditionné en utilisant un matériau de conditionnement approprié choisi dans le groupe comprenant : des sacs en polyéthylène, des sacs en toile de jute contrecollés en polyéthylène et des sacs en polyéthylène de faible densité (LDPE).

12. Procédé selon la revendication 1, dans lequel le matériau conditionné est stocké à température ambiante.

13. Procédé selon la revendication 1, dans lequel le thé CTC est dépourvu de saveur passée après avoir été stocké pendant 10 semaines.

14. Procédé selon la revendication 1, comprenant en outre une étape d'évaluation sensitive qui peut-être réalisée par un testeur professionnel ou un ensemble de testeurs de laboratoire professionnels.
